# EUROPÄISCHE PATENTSCHRIFT

(11) **EP 1 349 073 B1**
(45) Veröffentlichungstag und Bekanntmachung des Hinweises auf die Patenterteilung: **14.05.2008**
(21) Anmeldenummer: 02006874.8
(22) Anmeldetag: 26.03.2002
(51) Int. Cl.: G06F 11/36

(54) **Steuereinrichtung**
Control system
Système de commande

(43) Veröffentlichungstag der Anmeldung: 01.10.2003
(73) Patentinhaber: Infineon Technologies AG, 81669 München (DE)
(72) Erfinder: Mayer, Albrecht, Dr., 82041 Delsenhofen (DE); Khavrov, Vladimir, 81675 München (DE); Siebert, Harry, 82178 Puchheim (DE); Terry, Martin, Bristol BS7 9LE (GB)
(74) Vertreter: Repkow, Ines

(56) Entgegenhaltungen:
- EP-A- 0 636 976
- US-B1- 6 263 373

## Beschreibung

Die vorliegende Erfindung betrifft eine Vorrichtung gemäß dem Oberbegriff des Patentanspruchs 1, d.h. eine Steuereinrichtung, unter Verwendung welcher interne Zustände und Vorgänge einer programmgesteuerten Einheit von außerhalb derselben beobachtet und/oder verändert werden können.

Eine solche Steuereinrichtung ist Bestandteil von unterschiedlichsten Tools bzw. Geräten, beispielsweise
- von sogenannten Emulations- oder Debug-Tools, durch welche Fehler, die beim Betrieb einer programmgesteuerten Einheit auftreten, während des Betriebes der programmgesteuerten Einheit lokalisiert und beseitigt werden können, oder
- von sogenannten Kalibrierungs-Tool, durch welche während des Betriebes der programmgesteuerten Einheit Veränderungen bestimmter Einstellungen vorgenommen werden können, beispielsweise Veränderungen von Parametern, die das von der programmgesteuerten Einheit ausgeführte Programm verwendet, oder
- von sogenannten Fast-Prototyping-Tool, durch welche während des Betriebes der programmgesteuerten Einheit die Auswirkungen von Veränderungen von Einstellungen, beispielsweise die Auswirkungen von Veränderungen von Parametern, die das von der programmgesteuerten Einheit ausgeführte Programm verwendet, erfaßt werden können, oder Einstellungen in Abhängigkeit von den erfaßten Auswirkungen verändert werden können, etc.

Bei den programmgesteuerten Einheiten handelt es sich beispielsweise um Mikroprozessoren, Mikrocontroller, Signalprozessoren und dergleichen. Der Vollständigkeit halber sei angemerkt, daß diese jedoch über Vorkehrungen verfügen müssen, die einen Zugriff auf die internen Zustände oder Vorgänge gestatten. D.h., sie müssen wie beispielsweise eine sogenannten Bond-Out-Version einer programmgesteuerten Einheit zusätzliche Ein- und/oder Ausgabeanschlüsse aufweisen, oder ein sogenanntes On Chip Debug Support Modul (OCDS-Modul) aufweisen.

Die Aktionen, durch welche die Steuereinrichtung interne Zustände und Vorgänge der programmgesteuerten Einheit beobachten oder verändern kann, umfassen beispielsweise, aber nicht ausschließlich
- das Auslesen und Verändern der Inhalte von Registern oder sonstigen internen Speichereinrichtungen,
- das Veranlassen der programmgesteuerten Einheit, anstelle des Programmspeichers, aus welchem die programmgesteuerte Einheit die auszuführenden Befehle holt, einen sogenannten Overlay-Speicher zu verwenden,
- das Veranlassen der programmgesteuerten Einheit, die Befehlsausführung zu unterbrechen,
- das Veranlassen der programmgesteuerten Einheit zur Ausgabe sogenannter Trace-Daten,
- das Veranlassen der programmgesteuerte Einheit, die genannten und andere Aktionen beim Auftreten bestimmter Zustände oder Ereignisse auszuführen, etc.

Mitunter ist es erforderlich oder wünschenswert, daß von den vorstehend genannten Tools und/oder sonstigen Tools die eine Steuereinrichtung der eingangs erwähnten Art enthalten, mehrere Tools gleichzeitig verwendet werden, d.h. gleichzeitig mit der programmgesteuerten Einheit verbunden sind und mit dieser kooperieren.

Dies führt im allgemeinen zu Problemen, weil die erwähnten Tools aufgrund der völlig verschiedenen Aufgaben, die durch diese gelöst werden, häufig von verschiedenen Herstellern stammen und daher nicht oder jedenfalls häufig nicht ordnungsgemäß kooperieren. Insbesondere besteht eine nicht unerhebliche Wahrscheinlichkeit, daß sich die verschiedenen Tools gegenseitig stören.

Eine Steuereinrichtung gemäß dem Oberbegriff des Patentanspruchs 1 ist aus der US-B1-6 263 373 bekannt. Dieser Druckschrift sind jedoch keine Anregungen zur Lösung der vorstehend erwähnten Probleme entnehmbar.

Der vorliegenden Erfindung liegt daher die Aufgabe zugrunde, eine Möglichkeit zu finden, durch welche auf einfache Art und Weise gewährleistet werden kann, daß sich von verschiedenen Quellen veranlaßte Zugriffe auf die programmgesteuerte Einheit, durch welche interne Zustände und Vorgänge der programmgesteuerten Einheit von außerhalb derselben beobachtet und verändert werden können, gegenseitig nicht stören.

Diese Aufgabe wird erfindungsgemäß durch die im kennzeichnenden Teil des Patentanspruchs 1 beanspruchten Merkmale gelöst.

Dadurch, daß nur der Server auf die programmgesteuerte Einheit zugreifen kann, kann zuverlässig verhindert werden, daß sich von verschiedenen Systemkomponenten veranlaßte Zugriffe auf die programmgesteuerte Einheit nicht gegenseitig stören.

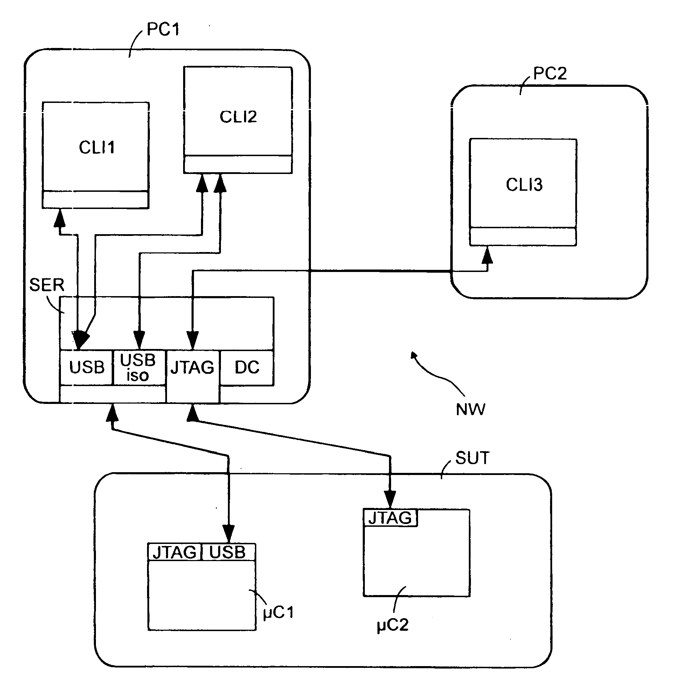

Vorteilhafte Weiterbildungen der Erfindung sind den Unteransprüchen, der folgenden Beschreibung, und der Figur entnehmbar.

Die Erfindung wird nachfolgend anhand eines Ausführungsbeispiels unter Bezugnahme auf die Figur näher erläutert.

Die Figur zeigt den Aufbau der im folgenden beschriebenen Anordnung.

Die in der Figur gezeigte Anordnung besteht aus einem zu untersuchenden System SUT, und einem damit verbundenen Netzwerk NW.

Das zu untersuchende System SUT ist im betrachteten Beispiel eine elektrische Leiterplatte, auf welcher zwei programmgesteuerte Einheiten µC1 und µC2 und diverse weitere, in der Figur nicht gezeigte Komponenten wie beispielsweise Speicher, Treiber, Schnittstellen etc. vorgesehen sind.

Die programmgesteuerten Einheiten µC1 und µC2 sind beispielsweise Mikroprozessoren, Mikrocontroller, Signalprozessoren oder dergleichen, und weisen Mittel auf, die es gestatten, daß eine außerhalb der programmgesteuerten Einheiten vorgesehene Einrichtung durch entsprechende Zugriffe auf dieselben interne Zustände und Vorgänge der programmgesteuerten Einheiten ermitteln und verändern kann.

Die außerhalb der programmgesteuerten Einheit vorgesehene Einrichtung ist das Netzwerk NW. Dieses Netzwerk, genauer gesagt ein Server SER desselben, ist über in den programmgesteuerten Einheiten µC1 und µC2 vorhandene Schnittstellen mit den programmgesteuerten Einheiten verbunden, und kann durch hierüber erfolgende Zugriffe auf die programmgesteuerten Einheiten interne Zustände und Vorgänge der programmgesteuerten Einheiten ermitteln und verändern.

Die Schnittstellen, über welche die programmgesteuerten Einheiten mit dem Server verbunden sind, sind im betrachteten Beispiel eine USB-Schnittstelle (programmgesteuerte Einheit µC1) bzw. eine JTAG-Schnittstelle (programmgesteuerte Einheit µC2) . Es sei jedoch darauf hingewiesen, daß die programmgesteuerten Einheiten unabhängig voneinander über beliebige Schnittstellen mit dem Server SER verbunden sein können. Insbesondere kann die Verbindung auch über andere Schnittstellen als über eine USB-Schnittstelle oder eine JTAG-Schnittstelle erfolgen, und darüber hinaus ist es auch nicht notwendig, daß die programmgesteuerte Einheiten über unterschiedliche Schnittstellen mit dem Server SER verbunden sind. Sofern es sich bei einer der programmgesteuerten Einheit um eine Bond-Out-Version oder dergleichen handelt, erfolgt die Verbindung mit dem Server nicht über eine genormte Schnittstelle, sondern über eine Anzahl von separaten Leitungen.

Das Netzwerk NW enthält neben dem vorstehend bereits erwähnten Server SER drei Clients CLI1, CLI2, und CLI3, wobei der Server SER, und die Clients CLI1 und CLI2 in einem ersten Computer PC1 untergebracht sind, und wobei der Client CLI3 in einem zweiten Computer PC2 untergebracht ist. Der Vollständigkeit halber sei darauf hingewiesen, daß beliebig viel mehr oder weniger Clients vorgesehen sein können, und daß der Server und die Clients beliebig auf beliebig viele Computer verteilt sein können.

Die Clients, die Bestandteil des den Server enthaltenden Computers sind, im betrachteten Beispiel also die Clients CLI1 und CLI2, sind mit dem Server SER über Software-Interfaces verbunden. Die Clients, die nicht Bestandteil des den Server enthaltenden Computers sind, im betrachteten Beispiel also der Client CLI3, sind mit dem Server über eine Netzwerk-Verbindung, beispielsweise über ein Ethernet LAN mittels TCP/IP-Protokoll verbunden.

Die Clients sind - eventuell mit Ausnahme der Schnittstellen zum Server - softwaremäßig realisiert. Es handelt sich jeweils um ein Anwendungsprogramm, welches abhängig von der durch den jeweiligen Client zu erfüllenden Aufgabe
(1) die Schnittstellen zum Benutzer der Anordnung (Anzeigevorrichtung, Eingabevorrichtungen etc.) bedient bzw. abfragt,
(2) Aktionen veranlaßt, durch welche es benötigte Informationen über die internen Zustände und Vorgänge innerhalb der programmgesteuerten Einheit erhalten kann,
(3) die erhaltenen Informationen auswertet, und/oder
(4) Aktionen veranlaßt, durch welche die internen Zustände und Vorgänge innerhalb der programmgesteuerten Einheit wunschgemäß verändert werden.

Im betrachteten Beispiel ist es so, daß die Clients CLI1 bis CLI3 verschiedene Aufgaben zu erfüllen haben. Genauer gesagt ist es so, daß der Client CLI1 zum Debuggen eines ersten Core der programmgesteuerten Einheit µC1 vorgesehen ist, der Client CLI2 als Kalibrierungs-Tool für die zweite programmgesteuerte Einheit µC2, und der Client CLI3 zum Debuggen eines zweiten Core der programmgesteuerten Einheit µC1. Es dürfte einleuchten, daß die vorhandenen Clients unabhängig voneinander beliebige Aufgaben erfüllen können.

Von der Aufgabe, die ein jeweiliger Client zu erfüllen hat, hängt es ab, welche der vorstehend genannten Aktionen (1) bis (4) wie ausgeführt werden. D.h., durch das den Client repräsentierende Programm wird die Funktion des Client bestimmt, also ob dieser (im Zusammenwirken mit der Server SER) ein Debug--Tool, ein Kalibrierungs-Tool, ein Fast-Prototyping-Tool oder ein sonstiges Tool ist.

Der Server SER ist teils hardwaremäßig, und teils softwaremäßig realisiert. Hardwaremäßig sind die verschiedenen Schnittstellen zu dem zu untersuchenden System SUT bzw. den darin vorgesehenen programmgesteuerten Einheiten µC1 und µC2 realisiert; der Rest ist softwaremäßig realisiert.

Der Server SER ist letztlich nichts anderes als eine intelligente Schnittstelle zwischen den Clients CLI1 bis CLI3 und den programmgesteuerten Einheiten µC1 und µC2.

Der Server SER erhält von den Clients CLI1 bis CLI3, genauer gesagt aus den vorstehend erwähnten Client-Aktionen (2) und (4) resultierende Anforderungen, und veranlaßt daraufhin die programmgesteuerten Einrichtungen µC1 und µC2 zur Durchführung der Operationen, die erforderlich sind, damit die Anforderungen der Clients erfüllt werden.

Die von den Clients abgegebenen Anforderungen spezifizieren ausschließlich die in den programmgesteuerten Einheiten auszuführende Aktionen, also beispielsweise, daß dann, wenn der Instruction Pointer der programmgesteuerten Einheit µC1 einen bestimmten Wert hat, der Inhalt eines bestimmten Registers der programmgesteuerten Einheit µC1 ausgelesen und ausgegeben wird. Die Anforderungen enthalten insbesondere keinerlei Informationen darüber, wie auf die programmgesteuerten Einheiten µC1 und µC2 zuzugreifen ist, damit die in den Anforderungen spezifizierten Aktionen ausgeführt werden. Die Festlegung, wie auf die programmgesteuerten Einheiten µC1 und µC2 zugegriffen werden muß, damit die in den Anforderungen spezifizierten Aktionen ausgeführt werden, erfolgt durch den Server SER, genauer gesagt durch einen an die programmgesteuerten Einheiten angepaßten Chip Adaptation Layer des Servers.

Der Chip Adaptation Layer enthält Zuordnungen zwischen den Aktionen, die von den Clients veranlaßt werden können und dürfen, und den Zugriffen auf die programmgesteuerten Einheiten, die zur Veranlassung der betreffenden Aktionen auszuführen sind.

In der Zuordnung sind auch die sogenannten workarounds berücksichtigt, die benötigt werden, wenn eine programmgesteuerte Einheit eine bestimmte Aktion ausführen soll, die sie eigentlich ausführen können müßte, aber - aus welchem Grund auch immer - nicht ausführen kann; in den workarounds ist festgelegt, durch welche Aktion(en) eine nicht ausführbare Aktion ersetzt werden kann.

Nach der Ermittlung des jeweils durchzuführenden Zugriffs auf eine programmgesteuerte Einheit meldet der Server dem Client, von welchem die zugrundeliegende Anforderung stammt, die Durchführung des Zugriffes. Darüber hinaus übermittelt der Server dem Client gegebenenfalls auch die Daten, die der Client durch die betreffende Anforderung erhalten wollte.

Die Clients CLI1 bis CLI3 sind in der Lage, an den Server mehrere Anforderungen enthaltende Anforderungs-Listen zu übermitteln.

Dies erweist sich in mehrfacher Hinsicht als vorteilhaft.

Einerseits können dadurch die Anforderungen der Clients in kürzerer Zeit zum Server übertragen werden als es der Fall ist, wenn jede Anforderung einzeln übertragen werden würde. Andererseits kann dem Server auf diese Art und Weise signalisiert werden, daß er mehrere Anforderungen, genauer gesagt die in einer Anforderungs-Liste enthaltenen Anforderung ohne Unterbrechung, d.h. ohne zwischenzeitliches Bedienen von anderen Anforderungen bedienen muß.

Vorzugsweise ist es so, daß ein Client bei Bedarf bereits zu einem Zeitpunkt, zu welchem der Server die ihm vorher von diesem Client zugeführten Anforderungen oder Anforderungs-Listen noch nicht abgearbeitet hat, weitere Anforderungen oder Anforderungs-Listen zum Server übertragen kann.

Der Server bedient die in einer Anforderungs-Liste enthaltenen Anforderungen vorzugsweise ohne Unterbrechung, d.h. er bedient zwischenzeitlich keine anderen Anforderungen des Clients oder Anforderungen von anderen Clients.

Der Server ist darüber hinaus in der Lage, zu entscheiden, in welcher Reihenfolge die bei ihm eintreffenden Anforderungen oder Anforderungs-Listen abzuarbeiten sind. Die Reihenfolge, in welcher der Server die Anforderungen abarbeitet, entspricht im einfachsten Fall der Reihenfolge, in welcher die betreffenden Anforderungen beim Server eintreffen. Vorzugsweise ist der Server aber auch in der Lage, die Reihenfolge, in welcher er die bei ihm eintreffenden Anforderungen abarbeitet, in Abhängigkeit von anderen Kriterien festzulegen. Es erweist sich beispielsweise als vorteilhaft, wenn der Server diese Reihenfolge in Abhängigkeit von Prioritäten festlegen kann, die den vorhandenen Clients zugewiesen sind, und/oder die die Clients den von ihnen ausgegebenen Anforderungen oder den von ihnen ausgegebenen Anforderungs-Listen zugewiesen haben. Dadurch kann erreicht werden, daß wichtige Anforderungen mit möglichst geringer Wartezeit bedient werden.

Der Server SER enthält im betrachteten Beispiel neben den vorstehend bereits erwähnten Komponenten eine als Dummy Chip DC bezeichnete Komponente. Diese Komponente ist Bestandteil des vorstehend bereits erwähnten Chip Adaptation Layer und enthält eine zumindest teilweise Nachbildung von wenigstens einer der programmgesteuerten Einheiten, auf welche der Server entsprechend den ihm zugeführten Anordnungen zugreifen kann.

Die Clients können festlegen, daß sich die an den Server übermittelten Anforderungen auf den Dummy Chip beziehen.

Dadurch ist es möglich, die ordnungsgemäße Funktion des Servers und/oder der Clients und/oder die ordnungsgemäße Kooperation von Server und Clients zu überprüfen. Hierdurch kann beispielsweise, aber bei weitem nicht ausschließlich überprüft werden,
- ob der Client und der Server ordnungsgemäß miteinander verbunden sind und/oder
- ob der Server die ihm zugeführten Anforderungen in die richtigen Zugriffe umsetzt.

Die beschriebene Anordnung erweist sich nach alledem in vielfacher Hinsicht als vorteilhaft. Insbesondere kann zuverlässig verhindert werden, daß sich von verschiedenen Systemkomponenten veranlaßte Zugriffe auf die programmgesteuerte Einheit gegenseitig stören.

### Bezugszeichenliste

- CLI1: Client
- CLI2: Client
- CLI3: Client
- DC: Dummy Chip
- NW: Netzwerk
- µC1: programmgesteuerte Einheit
- µC2: programmgesteuerte Einheit
- PC1: Computer
- PC2: Computer
- SER: Server
- SUT: zu untersuchendes System

## Patentansprüche

1. Steuereinrichtung, unter Verwendung welcher interne Zustände und Vorgänge einer programmgesteuerten Einheit (µC1, µC2) von außerhalb derselben beobachtet und/oder verändert werden können,
**dadurch gekennzeichnet,**
**daß** die Steuereinrichtung Bestandteil eines einen Server (SER) und mehrere Clients (CL11, CLI2, CLI3) umfassenden Netzwerkes (NW) ist,
- wobei die Clients (CLI1, CLI2, CLI3) die Systemkomponenten sind, durch welche die Beobachtung, Veränderung und/oder Auswertung der internen Zustände und Vorgänge der programmgesteuerten Einheit (µC1, µC2) durchgeführt oder veranlaßt werden, und
- wobei die Clients (CLI1, CLI2, CLI3) so ausgebildet sind, daß sie immer dann, wenn zur Erfüllung der diesen obliegenden Aufgaben ein Zugriff auf die programmgesteuerte Einheit (µC1, µC2) durchgeführt werden muß, an den Server (SER) eine Anforderung übermitteln, durch welche spezifiziert wird, welche Aktion durch den Zugriff zu veranlassen ist, und
- wobei der Server (SER) einen Chip Adaption Layer umfaßt, der Zuordnungen zwischen den Aktionen, die von den Clients (CLI1, CLI2, CLI3) veranlaßt werden können und dürfen, und den Zugriffen auf die programmgesteuerten Einheiten (µC1, µC2), die zur Veranlassung der betreffenden Aktionen auszuführen sind, enthält, und wobei der Server (SER) so ausgebildet ist, daß er unter Verwendung des Chip Adaption Layer festlegt, wie auf die programmgesteuerte Einheit (µC1, µC2) zugegriffen werden muß, damit die durch die Anforderungen spezifizierten Aktionen ausgeführt werden, und den entsprechenden Zugriff auf die programmgesteuerte Einheit (µC1, µC2) ausführt.

2. Steuereinrichtung nach Anspruch 1,
**dadurch gekennzeichnet,**
**daß** die Clients (CLI1, CLI2, CLI3) und der Server (SER) so ausgebildet sind, daß die von einem Client (CLI1, CLI2, CLI3) zum Server (SER) übertragenen Anforderungen in Einheiten von eine Vielzahl von Anforderungen enthaltenden Anforderungs-Listen übertragen werden.

3. Steuereinrichtung nach Anspruch 2,
**dadurch gekennzeichnet,**
**daß** der Server (SER) so ausgebildet ist, daß er die in einer Anforderungs-Liste enthaltenen Anforderungen ohne zwischenzeitliche Abarbeitung anderer Anforderungen abarbeitet.

4. Steuereinrichtung nach einem der vorhergehenden Ansprüche,
**dadurch gekennzeichnet,**
**daß** die Clients (CLI1, CLI2, CLI3) und der Server (SER) so ausgebildet sind, daß ein Client (CLI1, CLI2, CLI3) bereits zu einem Zeitpunkt, zu welchem der Server die ihm vorher von diesem Client (CLI1, CLI2, CLI3) zugeführten Anforderungen oder Anforderungs-Listen noch nicht abgearbeitet hat, weitere Anforderungen oder Anforderungs-Listen zum Server (SER) übertragen kann.

5. Steuereinrichtung nach einem der vorhergehenden Ansprüche,
**dadurch gekennzeichnet,**
**daß** der Server (SER) so ausgebildet ist, daß er die Reihenfolge, in welcher er die ihm zugeführten Anforderungen oder Anforderungs-Listen abarbeitet, unter Berücksichtigung von Prioritäten festlegt, die den Clients (CLI1, CLI2, CLI3) zugeordnet sind, von welchen die vom Server erhaltenen Anforderungen stammen.

6. Steuereinrichtung nach einem der vorhergehenden Ansprüche,
**dadurch gekennzeichnet,**
**daß** der Server (SER) so ausgebildet ist, daß er die Reihenfolge, in welcher er die ihm zugeführten Anforderungen oder Anforderungs-Listen abarbeitet, unter Berücksichtigung von Prioritäten festlegt, die die Clients (CLI1, CLI2, CLI3) den von ihnen stammenden Anforderungen oder Anforderungs--Listen zugewiesen haben.

7. Steuereinrichtung nach einem der vorhergehenden Ansprüche,
**dadurch gekennzeichnet,**
**daß** der Server (SER) so ausgebildet ist, daß er vor der Ausführung der ihm zugeführten Anforderungen oder Anforderungs-Listen überprüft, ob der Client (CLI1, CLI2, CLI3), von welchem eine jeweilige Anforderung oder Anforderungs-Liste stammt, zur Veranlassung der dadurch spezifizierten Aktionen berechtigt ist.

8. Steuereinrichtung nach einem der vorhergehenden Ansprüche,
**dadurch gekennzeichnet,**
**daß** der Server (SER) eine zumindest teilweise Nachbildung der programmgesteuerten Einheit (µC1, µC2) enthält, unter Verwendung welcher die ordnungsgemäße Funktion des Servers (SER) und/oder der Clients (CLI1, CLI2, CLI3) und/oder die ordnungsgemäße Kooperation von Server (SER) und Clients (CLI1, CLI2, CLI3) überprüft werden kann.

## Claims

1. Control device which can be used to observe and/or alter internal states and processes in a program-controlled unit (µC1, µC2) from outside it,
**characterized in that**
the control device is part of a network (NW) comprising a server (SER) and a plurality of clients (CLI1, CLI2, CLI3),
- the clients (CLI1, CLI2, CLI3) being the system components which perform or prompt the observation, alteration and/or evaluation of the internal states and processes in the program-controlled unit (µC1, µC2), and
- the clients (CLI1, CLI2, CLI3) being in a form such that whenever the program-controlled unit (µC1, µC2) needs to be accessed in order to perform their tasks, they send the server (SER) a request specifying what action needs to be prompted by the access, and
- the server (SER) comprising a chip adaptation layer which contains associations between the actions which can and are permitted to be prompted by the clients (CLI1, CLI2, CLI3) and the access operations to the program-controlled units (µC1, µC2) which need to be executed in order to prompt the relevant actions, and the server (SER) being in a form such that it uses the chip adaptation layer to stipulate how the program-controlled unit (µC1, µC2) needs to be accessed in order for the actions specified by the requests to be performed, and executes the corresponding access operation to the program-controlled unit (µC1, µC2).

2. Control device according to Claim 1,
**characterized**
**in that** the clients (CLI1, CLI2, CLI3) and the server (SER) are in a form such that the requests transmitted from a client (CLI1, CLI2, CLI3) to the server (SER) are transmitted in units from request lists containing a multiplicity of requests.

3. Control device according to Claim 2,
**characterized**
**in that** the server (SER) is in a form such that it processes the requests contained in a request list without processing other requests in the meantime.

4. Control device according to one of the preceding claims,
**characterized**
**in that** the clients (CLI1, CLI2, CLI3) and the server (SER) are in a form such that a client (CLI1, CLI2, CLI3) can transmit further requests or request lists to the server (SER) actually at a time at which the server has not yet processed the requests or request lists supplied to it previously by this client (CLI1, CLI2, CLI3).

5. Control device according to one of the preceding claims,
**characterized**
**in that** the server (SER) is in a form such that it stipulates the order in which it processes the requests or request lists supplied to it taking account of priorities which are associated with the clients (CLI1, CLI2, CLI3) from which the requests received by the server originate.

6. Control device according to one of the preceding claims,
**characterized**
**in that** the server (SER) is in a form such that it stipulates the order in which it processes the requests or request lists supplied to it taking account of priorities which the clients (CLI1, CLI2, CLI3) have assigned to the requests or request lists originating from them.

7. Control device according to one of the preceding claims,
**characterized**
**in that** the server (SER) is in a form such that, before executing the requests or request lists supplied to it, it checks whether the client (CLI1, CLI2, CLI3) from which a respective request or request list originates is authorized to prompt the actions specified thereby.

8. Control device according to one of the preceding claims,
**characterized**
**in that** the server (SER) contains an at least partial simulation of the program-controlled unit (µC1, µC2) which can be used to check the correct operation of the server (SER) and/or the clients (CLI1, CLI2, CLI3) and/or the correct cooperation of the server (SER) and clients (CLI1, CLI2, CLI3).

## Revendications

1. Dispositif de commande qui, lorsqu'on l'utilise, permet d'observer et/ou modifier de l'extérieur des états internes et des opérations d'une unité (µC1, µC2) commandée par programme,
**caractérisé en ce que**
l'unité de commande fait partie d'un réseau (NW) qui comprend un serveur (SER) et plusieurs clients (CLI1, CLI2, CLI3),
- les clients (CLI1, CLI2, CLI3) étant des composants du système par lesquels l'observation, la modification et/ou l'évaluation des états internes et des opérations de l'unité (µC1, µC2) commandée par programme sont réalisées ou permises, et
- les clients (CLI1, CLI2, CLI3) étant configurés de telle sorte que lorsque pour réaliser les tâches qui leur sont confiées, ils doivent réaliser un accès à l'unité (µC1, µC2) commandée par programme, ils transmettent au serveur (SER) une demande qui spécifie quelle action doit être lancée par l'accès et
- le serveur (SER) comprenant une couche d'adaptation de puce qui contient les associations entre les actions qui peuvent et doivent être lancées par les clients (CLI1, CLI2, CLI3) et les accès aux unités (µC1, µC2) commandées par programme et qui doivent être réalisées pour lancer les actions concernées, le serveur (SER) étant configuré de telle sorte qu'en utilisant la couche d'adaptation de puce, il définit comment il faut accéder à l'unité (µC1 µC2) commandée par programme pour que les actions spécifiées par les demandes soient exécutées et il exécute l'accès concerné à l'unité (µC1, µC2) commandée par programme .

2. Dispositif de commande selon la revendication 1, **caractérisé en ce que** les clients (CLI1, CLI2, CLI3) et le serveur (SER) sont configurés de telle sorte que les demandes transmises par un client (CLI1, CLI2, CLI3) au serveur (SER) sont transférées en unités de plusieurs listes de demandes qui contiennent plusieurs demandes.

3. Dispositif de commande selon la revendication 2, **caractérisé en ce que** le serveur (SER) est configuré de telle sorte qu'il traite les demandes que contient une liste de demandes sans traiter entre-temps d'autres demandes.

4. Dispositif de commande selon l'une des revendications précédentes, **caractérisé en ce que** les clients (CLI1, CLI2, CLI3) et le serveur (SER) sont configurés de telle sorte qu'au moment où le serveur n'a pas encore traité les demandes ou listes de demandes qui lui ont été transmises précédemment par ce client (CLI1, CLI2, CLI3), un client (CLI1 CLI2, CLI3) peut transmettre au serveur (SER) d'autres demandes ou listes de demandes.

5. Dispositif de commande selon l'une des revendications précédentes, **caractérisé en ce que** le serveur (SER) est configuré de telle sorte qu'il définit la succession dans laquelle les demandes ou listes de demandes qui lui sont transmises en tenant compte de priorités qui sont associées aux clients (CLI1, CLI2, CLI3) desquels proviennent les demandes reçues par le serveur.

6. Dispositif de commande selon l'une des revendications précédentes, **caractérisé en ce que** le serveur (SER) est configuré de telle sorte qu'il définit la succession dans laquelle les demandes ou listes de demandes qui lui sont apportées en tenant compte de priorités que les clients (CLI1, CLI2, CLI3) ont attribuées aux demandes ou listes de demandes qui en proviennent.

7. Dispositif de commande selon l'une des revendications précédentes, **caractérisé en ce que** le serveur (SER) est configuré de telle sorte qu'avant l'exécution des demandes ou listes de demandes qui lui sont transmises, il vérifie si le client (CLI1, CLI2, CLI3) duquel provient chaque demande ou liste de demandes est autorisé à lancer les actions ainsi spécifiées.

8. Dispositif de commande selon l'une des revendications précédentes, **caractérisé en ce que** le serveurs (SER) contient une copie au moins partielle de l'unité (µC1, µC2) commandée par programme et peut vérifier en l'utilisant le fonctionnement correct du serveur (SER) et/ou des clients (CLI1, CLI2, CLI3) et/ou la coopération correcte entre le serveur (SER) et les clients (CLI1, CLI2, CLI3).
